# EUROPÄISCHE PATENTSCHRIFT

(11) **EP 0 537 465 B1**
(45) Veröffentlichungstag und Bekanntmachung des Hinweises auf die Patenterteilung: **12.04.1995**
(21) Anmeldenummer: 92115021.5
(22) Anmeldetag: 03.09.1992
(51) Int. Cl.: A61C 17/26

(54) **Zahnbürste mit einem Bürstenkopf, der zumindest einen drehantreibbar gelagerten Bürstenhalter aufweist**
Toothbrush having a brush head containing at least one rotatable brush
Brosse à dents dont la tête est munie d'au moins un support de brosse monté sur palier et pouvant être entraîné en rotation

(30) Priorität: 11.10.1991 IL 99717
(43) Veröffentlichungstag der Anmeldung: 21.04.1993
(73) Patentinhaber: KUNO MOSER GMBH, FABRIK FUR FEINMECHANIK UND ELEKTROTECHNIK, D-78089 Unterkirnach (DE)
(72) Erfinder: Zivi, Davidovitz, IL-75 309 Rishon lezion (IL); Israel, Ramot, IL-44 538 Kfar Saba (IL)
(74) Vertreter: Schmitt, Hans, Dipl.-Ing.

(56) Entgegenhaltungen:
- EP-A- 0 208 401
- EP-A- 0 357 863
- US-A- 4 156 620

## Beschreibung

Die Erfindung betrifft eine Zahnbürste mit einem Bürstenkopf, der zumindest einen drehantreibbar gelagerten Borstenhalter aufweist, welcher die Borsten oder Borstenbündel der Zahnbürste trägt und mit einem Bewegungsantrieb in Antriebsverbindung steht.

Eine derartige Zahnbürste ist beispielsweise aus der US-A-4 156 620 bekannt.

In den letzten Jahren sind motorgetriebene Zahnbürsten mit alternierend rotierenden Borstenhaltern allgemein sehr beliebt geworden. Derartige Zahnbürsten umfassen einen Griff an einem Ende, einen Bürstenkopf an dem gegenüberliegenden Ende, mindestens einen (für gewöhnlich mehrere) Borstenhalter, die in dem Bürstenkopf drehbar gelagert sind, einen Motor innerhalb des Griffs sowie einen Übertragungsmechanismus, der den Motor an den Borstenhalter kuppelt, um diesen bei Energiezuführung des Motors um seine Längsachse abwechselnd in gegensätzliche Drehrichtungen rotieren zu lassen.

Die alternierend rotierende Bewegung der Borstenhalter ist als wirksam gefunden worden, um den Zahnbelag, nämlich die weiche amorphe Ablagerung, die sich auf den Zahnoberflächen ansammelt, besser zu entfernen.

So ist aus der DE-OS 39 37 854 bereits eine elektrische Zahnbürste bekannt, bei der die Rotationsbewegungen des Antriebsmotors über ein Gelenkviereck in eine alternierend rotierende Drehbewegung des Borstenhalters umgesetzt werden, dessen Drehachse mit einer Schwinge des Gelenkviereckes drehfest verbunden ist. Gegenüber herkömmlichen Bewegungsumsetzungen soll die aus der DE-OS 39 37 854 vorbekannte Zahnbürste einen wesentlich höheren Wirkungsgrad aufweisen.

Ein Ziel der vorliegenden Erfindung ist es insbesondere, eine neuartige Zahnbürste der eingangs erwähnten Art zu schaffen, welche die Entfernung von Zahnbelag weiter verbessert.

Die erfindungsgemäße Lösung dieser Aufgabe besteht bei der Zahnbürste der eingangs erwähnten Art insbesondere darin, daß der Borstenhalter für eine gleichzeitige Dreh- und Schiebebewegung am Bürstenkopf quer zur Längserstreckung der Borsten oder Borstenbündel verschieblich geführt ist. Die erfindungsgemäße Zahnbürste läßt also den oder die Borstenhalter nicht nur um die eigene Längsachse in gegensätzliche Drehrichtungen alternierend rotieren, sondern bewegt diese Borstenhalter auch quer zu ihrer Längsachse. Eine derartige gleichzeitige Dreh- und Schiebebewegung des Borstenhalters in der Zahnbürste verbessert die Entfernung von Zahnbelag beim Bürsten der Zähne mit Hilfe der erfindungsgemäßen Zahnbürste.

Eine Weiterbildung gemäß der Erfindung sieht dazu vor, daß der Bewegungsantrieb mit dem Borstenhalter über ein Dreh-Schub-Getriebe in Antriebsverbindung steht und daß das Dreh-Schub-Getriebe vorzugsweise eine oszillierende Linearbewegung des Borstenhalters in eine gleichzeitige Dreh-Bewegung des Borstenhalters um seine Längsachse umsetzt. Dabei besteht eine besonders einfache und vorteilhafte Ausführungsform gemäß der Erfindung darin, daß das Dreh-Schub-Getriebe wenigstens ein Zahnrad oder dergleichen Rotationsantriebsorgan aufweist, welches mit jeweils einem Borstenhalter drehfest verbunden ist, daß das Dreh-Schub-Getriebe zumindest eine Zahnstange oder dergleichen Gegenantriebsorgan hat, das gegenüber dem Bürstenkopf ortsfest gehalten ist und daß sich das Rotationsantriebsorgan bei einer Schiebebewegung am Gegenantriebsorgan abwälzt.

Ebenso wie der Borstenhalter ist auch das mit ihm drehfest verbundene Rotationsantriebsorgan am Bürstenkopf quer zur Längserstreckung der Borsten oder Borstenbündel verschieblich geführt. Bei einer Schiebebewegung des Rotationsantriebsorgans wälzt sich dieses am Gegenantriebsorgan ab, so daß das Rotationsantriebsorgan und ebenso der ihm zugeordnete Borstenhalter neben einer linearen Schiebebewegung gleichzeitig auch eine Dreh- beziehungsweise Dreh-Schwingbewegung vollführt. Sind das Rotationsantriebsorgan sowie das Gegenantriebsorgan als Zahnrad beziehungsweise Zahnstange ausgebildet, so können die beim Zähneputzen erforderlichen Antriebskräfte im Vergleich beispielsweise zu einem Friktionsantrieb besonders gut auf den Borstenhalter übertragen werden.

Vorteilhaft ist es, wenn das Rotationsantriebsorgan oder die Rotationsantriebsorgane zwischen zwei Trägerplatten drehbar gelagert sind, die vorzugsweise im Bürstenkopf verschieblich geführt und insbesondere über eine Schubstange mit dem Bewegungsantrieb verbunden sind. Dabei kann ein beidseits des Rotationsantriebsorgans vorstehender Wellenschaft jeweils in einer runden Öffnung drehbar gelagert sein, die an einer der beiden Trägerplatten vorzusehen ist.

Eine bevorzugte Ausführungsform gemäß der Erfindung sieht vor, daß das Gegenantriebsorgan etwa U-förmig ausgebildet und in Schieberichtung des Borstenhalters oder der Borstenhalter vorzugsweise formschlüssig im Bürstenkopf gehalten ist, daß das Gegenantriebsorgan zweckmäßigerweise zwischen den beiden Trägerplatten angeordnet ist, daß sich das Rotationsantriebsorgan oder die Rotationsantriebsorgane innenseitig am Gegenantriebsorgan abwälzen und daß dazu das Gegenantriebsorgan an zumindest einem freien Endbereich oder Steg seiner U-Form insbesondere eine Zahnung aufweist. Bei einer solchen bevorzugten Ausführungsform der Erfindung ist in der durch die Trägerplatten gebildeten Trägervorrichtung mindestens einer, vorzugsweise mehrere Borstenhalter drehbar gelagert, wobei jeder Borstenhalter mit einem ihm zugeordneten Rotationsantriebsorgan drehfest verbunden ist, welches sich an der Zahnstange oder dergleichen Gegenantriebsorgan abwälzt. Das Vorhandensein von zwei (oder mehr) Borstenhaltern, welche die oben beschriebenen kombinierten Schiebe- und Dreh-Schwing-Bewegungen ausführen, verbessert die Entfernung von Zahnbelag noch zusätzlich.

Zu diesem Zweck kann es aber auch vorteilhaft sein, wenn das Dreh-Schub-Getriebe mehrere, vorzugsweise zwei Rotationsantriebsorgane für jeweils einen Borstenhalter aufweist und wenn sich die benachbarten Rotationsantriebsorgane jeweils auf einander gegenüberliegenden Seiten an zumindest einem Gegenantriebsorgan abwälzen, so daß die benachbarten Rotationsantriebsorgane bei dieser Ausführungsform stets gegensätzliche Drehrichtungen aufweisen.

Weitere Merkmale der Erfindung ergeben sich aus der folgenden Beschreibung erfindungsgemäßer Ausführungsbeispiele in Verbindung mit den Ansprüchen sowie der Zeichnung.

Es zeigt:
- **Fig. 1**: den Bürstenkopf einer elektrischen Zahnbürste in einer perspektivischen Darstellung,
- **Fig. 2**: die Zahnbürste aus Figur 1 in einer perspektivischen Darstellung mit ihren auseinandergezogenen Hauptbestandteilen,
- **Fig. 3**: ein als Zahnrad ausgebildetes Rotationsantriebsorgan der Zahnbürste aus Figur 1 und 2 in einem Längsschnitt,
- **Fig. 4**: einen mit dem Rotationsantriebsorgan aus Figur 3 kuppelbaren Borstenhalter der Zahnbürste aus Figur 1 und 2 in einer teilweise geschnittenen Seitendarstellung,
- **Fig. 5**: eine Draufsicht auf ein mit dem Rotationsantriebsorgan aus Figur 3 zusammenwirkendes, etwa U-förmiges Gegenantriebsorgan und
- **Fig. 6**: ein Gegenantriebsorgan, ähnlich dem aus Figur 5, das an den beiden freien Enden seiner U-Form eine Zahnung zum Zusammenwirken mit jeweils einem Rotationsantriebsorgan aufweist.

Die in den Figuren dargestellte Zahnbürste, weist an ihrem einen Endbereich einen - hier nur teilweise dargestellten - Griff 2 und an ihrem gegenüberliegenden Endbereich einen Bürstenkopf 3 auf. Der Bürstenkopf 3 hat zwei Borstenhalter 4, die jeweils mehrere Borstenbündel tragen und im Bürstenkopf 3 drehbar gelagert sind. Die Zahnbürste hat einen innerhalb des Griffs 2 angeordneten Motor 5 als Bewegungsantrieb, der mit jedem der Borstenhalter 4 derart in Antriebsverbindung steht, daß diese bei einer Kraftzufuhr des Motors 5 alternierend rotieren, d. h. sich abwechselnd in gegensätzliche Drehrichtungen um ihre Längsachse drehen.

Um beim Zähneputzen den Zahnbelag noch besser entfernen zu können, sind die Borstenhalter 4 für eine gleichzeitige Dreh- und Schiebebewegung am Bürstenkopf 3 quer zur Längserstreckung der Borstenhalter 4 und ihrer Borstenbündel verschieblich geführt. Dazu ist der Bewegungsantrieb 5 mit den Borstenhaltern 4 über ein Dreh-Schub-Getriebe verbunden, das eine oszillierende Linearbewegung der Borstenhalter 4 in verlängerter Richtung des Griffes 2 in eine gleichzeitige Dreh-Schwing-Bewegung der Borstenhalter 4 um ihre Längsachse umsetzt. Dieses Dreh-Schub-Getriebe weist zwei als Zahnräder 13 ausgebildete Rotationsantriebsorgane auf, die mit jeweils einem Borstenhalter 4 drehfest kuppelbar sind. Die Zahnräder 13 sind zwischen einer oberen Trägerplatte 12 und einer unteren Trägerplatte 11 drehbar gehalten, die Teile einer Trägervorrichtung 10 sind.

Die Trägerplatte 11 weist zwei runde Öffnungen 11a, 11b auf, sowie ein paar Rippen 11c an einer Kante; in ähnlicher Weise ist auch die Trägerplatte 12 ausgebildet, mit einem Paar runder Öffnungen 12a, 12b und einem Paar Rippen 12c an einem Ende. Die Trägerplatte 11 weist ferner zwischen den beiden runden Öffnungen 11a, 11b eine zylindrische Fassung 11d auf, in die ein zylindrischer und mit der Trägerplatte 12 einstückig verbundener Stift 12d eingesetzt werden kann, wobei der Stift 12d einrastet, um die beiden Platten 11, 12 mit den dazwischen befindlichen Zahnrädern 13 zusammen zu halten. Der Stift 12d stellt ein Rastverbindungsmittel dar, welches die Trägerplatten 11 und 12 in ihrer Arbeitsstellung hält.

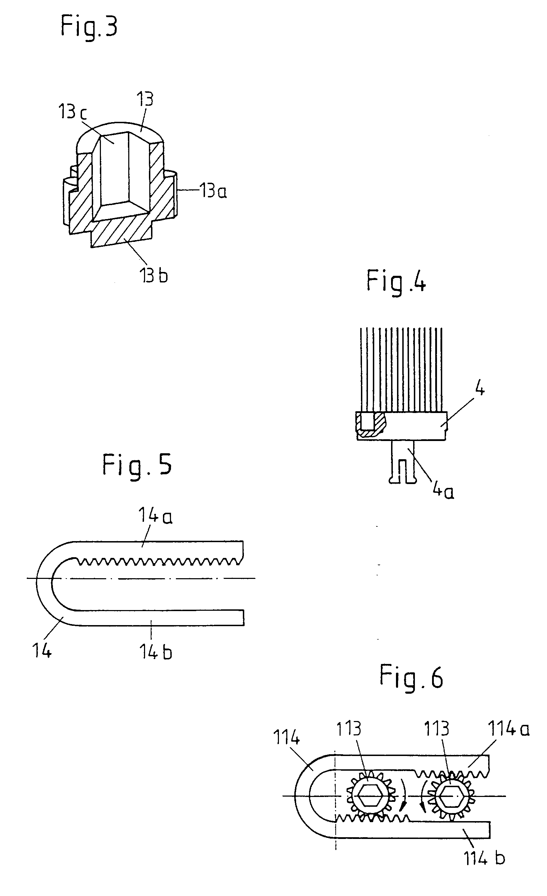

Wie in Figur 3 genauer dargestellt ist, weist jedes der Rotationsantriebsorgane 13 am Umfang Zähne 13a sowie an beiden Stirnenden jeweils einen Wellenzapfen auf, wobei in Figur 3 nur der untere Wellenzapfen mit 13b bezeichnet ist. Während der in Figur 3 untere Wellenzapfen 13b der Zahnräder 13 in den entsprechenden runden Öffnungen 11a, 11b der unteren Trägerplatte 11 aufgenommen sind, werden die oberen Wellenzapfen der Zahnräder 13 in den entsprechenden Öffnungen 12a, 12b der oberen Trägerplatte 12 drehbar gelagert. An den oberen Wellenzapfen der Zahnräder 13 ist jeweils eine, in ihrem lichten Querschnitt sechseckige Ausnehmung 13c vorgesehen, in die ein komplementär geformter und einstückig mit einem der Borstenhalter 4 verbundener Kupplungszapfen 4a einsetzbar ist. Kupplungszapfen 4a und Kupplungsausnehmung 13c bilden jeweils eine Steckkupplung, die einen der Borstenhalter 4 mit dem ihm zugeordneten Zahnrad lösbar und dennoch drehfest verbindet, so daß die Drehung eines Rotationsantriebsorgans 13 auch den ihm zugeordneten Borstenhalter 4 dreht.

Die Trägervorrichtung 10 sowie die beiden Zahnräder 13 und ihre entsprechenden Borstenhalter 4 sind innerhalb des in dem Bürstenkopf 3 gebildeten Hohlraums 3a in Längsrichtung des Griffes 2 zum Motor 5 hin- und herbewegbar. Ein U-förmiges Zahnstangenelement 14 oder dergleichen Gegenantriebsorgan ist innerhalb des Hohlraums 3a des Bürstenkopfes 3 in Schieberichtung der Borstenhalter 4 formschlüssig gehalten. Das Zahnstangenelement 14 umfaßt einen Schenkel 14a mit Zähnen, die bei einer Schiebebewegung der Zahnräder 13 mit den Zähnen 13a der Zahnräder 13 kämmen. Da die Zahnräder 13 sich somit auf derselben Seite an dem als Gegenantriebsorgan dienenden Zahnstangenelement 14 abwälzen, weisen die Zahnräder 13 während einer Schiebebewegung des Zahnstangenelementes 14 im Bürstenkopf 3 dieselbe Drehrichtung auf. Die in den gezahnten Schenkel 14a des U-förmigen Zahnstangenelements 14 eingreifenden Zahnräder 13 lassen die mit ihnen drehfest verbundenen Borstenhalter 4 um ihre jeweiligen Längsachsen alternierend rotieren, wenn die Trägervorrichtung 10 mittels einer Schubstange 9 innerhalb des Hohlraums 3a des Bürstenkopfes 3 hin- und herbewegt wird.

Um die Schubstange 9 in oszillierenden Linearbewegungen hin- und herzubewegen, ist ein Kurbeltrieb oder dergleichen Übertragsungsmechanismus vorgesehen, der die Drehbewegungen des Rotationsmotors beziehungsweise seiner Abtriebswelle in oszillierende Schiebebewegungen der Schubstange 9 umsetzt. Die Abtriebswelle des Motors 5 ist dazu mit einem Zahnrad 6 drehfest verbunden, welches mit einem Kronenrad 7 kämmt. An diesem, die Rotation der Abtriebswelle untersetzenden Kronenrad 7 ist mit seinem einen Ende ein Kurbelarm 8 exzentrisch gelagert, der an seinem entgegengesetzten Ende mit der Schubstange 9 verbunden ist, um diese hin- und herzubewegen. Die Schubstange 9 bildet an einem Ende eine Fassung 9a, welche eine an dem Ende 8b des Kurbelarms 8 ausgebildete Kugel aufnimmt. Das entgegengesetzte Ende der Schubstange 9 weist eine ringförmige Nut 9b auf, die mit einer Trägervorrichtung, allgemein mit 10 bezeichnet, verbunden ist, welche die zwei Borstenhalter 4 trägt. Dabei wird die Nut 9b von den Rippen 11c und 12c der Trägervorrichtung 10 hintergriffen.

Eine Abdeckplatte 15 schließt die Fassung 3a des Bürstenkopfes 3. Die Abdeckplatte 15 weist ein Paar als Langlöcher ausgebildete Öffnungen 15a, 15b zur Aufnahme der Kupplungszapfen 4a der beiden Borstenhalter 4 auf.

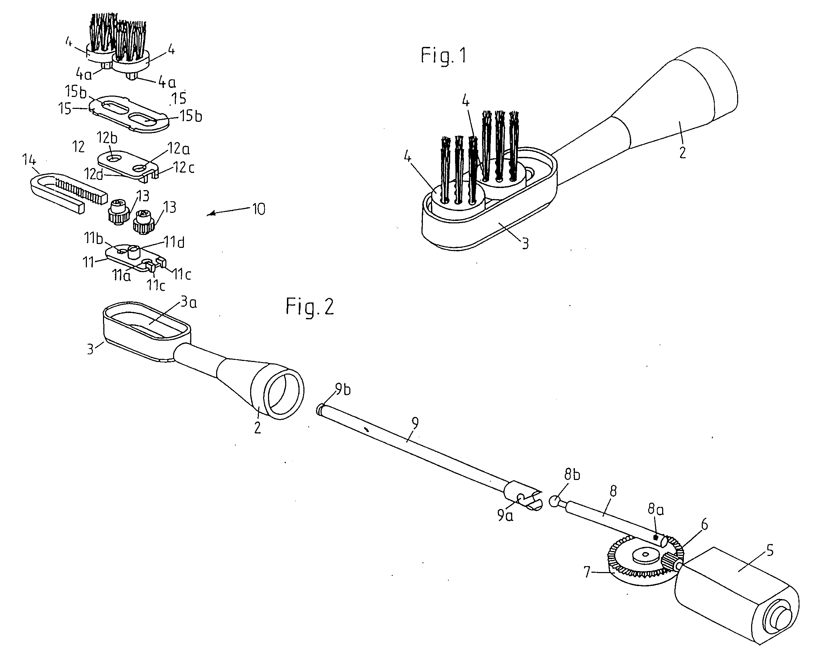

In Figur 2 ist dargestellt, daß die Öffnungen 15a, 15b in der zur Längsachse des Griffes 2 parallelen Richtung verlängert sind, um die Hin- und Herbewegungen der Borstenhalter 4 zu ermöglichen.

Bei einer Inbetriebnahme des Rotationsmotors 5 treibt dieser das mit seiner Abtriebswelle koaxial und drehfest verbundene Zahnrad 6 an, welches mit dem rechtwinklig zur Abtriebswelle des Rotationsmotors 5 drehbar gelagerten Kronenrad 7 kämmt. An dem Kronenrad 7 ist das Ende 8a des Kurbelarmes 8 exzentrisch gelagert, der mit seinem entgegengesetzten Ende 8b in der oben beschriebenen Weise an die Schubstange 9 gekuppelt ist. Die Drehbewegungen des Rotationsmotors 5 werden somit vom Kurbeltrieb in oszillierende Hin- und Herbewegungen des Kurbelarmes 8 sowie der mit ihm verbundenen Schubstange 9 umgesetzt.

Die an der Trägervorrichtung 10 angreifende Schubstange 9 bewegt die Trägervorrichtung 10 sowie die darin drehbar gelagerten Zahnräder 13 mit ihren Borstenhaltern 4 innerhalb des Hohlraumes 3a des Bürstenkopfes 3 ebenfalls hin und her. Dabei lassen die mit dem gezahnten Schenkel 14a des im Bürstenkopfhohlraumes 3a befestigten U-förmigen Zahnstangenelementes 14 kämmenden Zahnräder 13 die Borstenhalter 4 um ihre Längsachsen drehen. Die Borstenhalter vollführen eine Dreh-Schwing-Bewegung, d. h. während einer Längsbewegung der Trägervorrichtung 10 sowie der Borstenhalter 4 werden die beiden Zahnräder 13 im Uhrzeigersinn gedreht; mit einer Richtungsänderung der Trägervorrichtung 10 drehen sich auch die Zahnräder 13 in entgegengesetzte Richtung gegen den Uhrzeigersinn. Da die beiden Borstenhalter 4 mit den Zahnrädern 13 drehfest gekuppelt sind, werden sie während der Vorlaufperioden ebenfalls im Uhrzeigersinn und während der Rücklaufperioden entgegen dem Uhrzeigersinn gedreht. Dies hat zur Folge, daß bei einer Inbetriebnahme des Rotationsmotors 5 die beiden Borstenhalter 4 sowohl in eine oszillierende Linearbewegung als auch in eine Dreh-Schwingbewegung versetzt werden, wodurch beim Zähneputzen die Entfernung des Zahnbelages verbessert wird.

In Figur 6 ist ein geringfügig abgewandeltes Zahnstangenelement 114 dargestellt. Das Zahnstangenelement 114 weist nur an einem Teilbereich eines Schenkels 114a eine Zahnung auf, die mit dem ebenfalls als Zahnrad ausgebildeten Rotationsantriebsorgan 113 eines - hier nicht weiter dargestellten - Borstenhalters zusammenwirkt. Auch der andere Schenkel 114b des Zahnstangenelements 114 weist eine Zahnung auf, die mit dem Rotationsantriebsorgan 113 des anderen Borstenhalters zusammenwirkt. Im Gegensatz zu der in den Figuren 1 bis 5 dargestellten Ausführungsform, bei der die beiden Borstenhalter während der Vor- und Rücklaufperioden jeweils in der gleichen Richtung rotieren, drehen sich die beiden Borstenhalter bei der in Figur 6 dargestellten Ausführungsform in entgegengesetzte Richtungen.

Die Erfindung wurde hier nur im Hinblick auf zwei bevorzugte beispielhafte Ausführungsformen beschrieben, jedoch sind weitere Variationen, Modifikationen und Anwendungsweisen der Erfindung möglich.

## Patentansprüche

1. Zahnbürste mit einem Bürstenkopf (3), der zumindest einen drehantreibbar gelagerten Borstenhalter (4) aufweist, welcher die Borsten oder Borstenbündel der Zahnbürste trägt und mit einem Bewegungsantrieb in Antriebsverbindung steht, **dadurch gekennzeichnet,** daß der Borstenhalter (4) für eine gleichzeitige Dreh- und Schiebebewegung am Bürstenkopf (3) quer zur Längserstreckung der Borsten oder Borstenbündel verschieblich geführt ist.

2. Zahnbürste nach Anspruch 1, dadurch gekennzeichnet, daß der Bewegungsantrieb mit dem Borstenhalter (4) über ein Dreh-Schub-Getriebe in Antriebsverbindung steht und daß das Dreh-Schub-Getriebe vorzugsweise eine oszillierende Linearbewegung des Borstenhalters (4) in eine gleichzeitige Dreh-Bewegung des Borstenhalters (4) um seine Längsachse umsetzt.

3. Zahnbürste nach Anspruch 1 oder 2, dadurch gekennzeichnet, daß das Dreh-Schub-Getriebe wenigstens ein Zahnrad (13, 113) oder dergleichen Rotationsantriebsorgan aufweist, welches mit jeweils einem Borstenhalter (4) drehfest verbunden ist, daß das Dreh-Schub-Getriebe zumindest ein Zahnstangenelement (14, 114) oder dergleichen Gegenantriebsorgan hat, das gegenüber dem Bürstenkopf (3) ortsfest gehalten ist und daß sich das Rotationsantriebsorgan bei einer Schiebebewegung am Gegenantriebsorgan abwälzt.

4. Zahnbürste nach einem der Ansprüche 1 bis 3, dadurch gekennzeichnet, daß das Rotationsantriebsorgan (13, 113) oder die Rotationsantriebsorgane zwischen zwei Trägerplatten (11, 12) drehbar gelagert sind, die vorzugsweise im Bürstenkopf (3) verschieblich geführt und insbesondere über eine Schubstange (9) mit dem Bewegungsantrieb verbunden sind.

5. Zahnbürste nach einem der Ansprüche 1 bis 4, dadurch gekennzeichnet, daß das Gegenantriebsorgan (14, 114) etwa U-förmig ausgebildet und in Schieberichtung des Borstenhalters (4) oder der Borstenhalter vorzugsweise formschlüssig im Bürstenkopf (3) gehalten ist, daß das Gegenantriebsorgan (14, 114) zweckmäßigerweise zwischen den beiden Trägerplatten (11, 12) angeordnet ist, daß sich das Rotationsantriebsorgan (13, 113) oder die Rotationsantriebsorgane innenseitig am Gegenantriebsorgan (14, 114) abwälzen und daß dazu das Gegenantriebsorgan (14, 114) an zumindest einem freien Endbereich oder Steg seiner U-Form insbesondere eine Zahnung aufweist.

6. Zahnbürste nach einem der Ansprüche 1 bis 5, dadurch gekennzeichnet, daß das Dreh-Schub-Getriebe mehrere, vorzugsweise zwei Rotationsantriebsorgane (13) für jeweils einen Borstenhalter aufweist und daß auf derselben Seite der Rotationsantriebsorgane (13) sich diese an zumindest einem Gegenantriebsorgan (14) abwälzen.

7. Zahnbürste nach einem der Ansprüche 1 bis 5, dadurch gekennzeichnet, daß das Dreh-Schub-Getriebe mehrere, vorzugsweise zwei Rotationsantriebsorgane (113) für jeweils einen Borstenhalter (4) aufweist und daß sich die benachbarten Rotationsantriebsorgane (113) jeweils auf einander gegenüberliegenden Seiten an zumindest einem Gegenantriebsorgan abwälzen.

8. Zahnbürste nach einem der vorstehenden Ansprüche, dadurch gekennzeichnet, daß zwei Rotationsantriebsorgane (113) für jeweils einen Borstenhalter (4) vorgesehen sind, von denen sich ein erstes Rotationsantriebsorgan (113) an dem einen freien Endbereich (114a) und von denen sich ein zweites Rotationsantriebsorgan (113) an dem anderen gegenüberliegenden freien Endbereich (114b) des etwa U-förmigen Gegenantriebsorgans (114) abwälzt und daß das Gegenantriebsorgan dazu an den beiden freien Endbereichen oder Stegen (114a, 114b) seiner U-Form eine Zahnung aufweist.

9. Zahnbürste nach einem der Ansprüche 1 bis 8, dadurch gekennzeichnet, daß jeder Borstenhalter (4) an dem ihm zugeordneten Rotationsantriebsorgan (13, 113) vorzugsweise über eine Steck- und/oder Klemmkupplung lösbar gehalten ist und daß dazu von diesen beiden Zahnbürsten-Teilen (4; 13, 113) das eine Zahnbürsten-Teil (13, 113) eine unrunde, vorzugsweise mehreckige Kupplungsausnehmung (13c) hat, in die ein Kupplungszapfen (4a) des jeweils anderen Zahnbürsten-Teiles (4) formschlüssig einsetzbar ist.

10. Zahnbürste nach Anspruch 9, dadurch gekennzeichnet, daß der oder die Kupplungszapfen (4a) vorzugsweise jeweils ein sich in Schieberichtung der Borstenbündel (4) erstreckendes Langloch (15b) durchsetzen, welches in einer Abdeckplatte (15) oder dergleichen äußeren Gehäuseseite des Bürstenkopfes (3) angeordnet ist.

11. Zahnbürste nach einem der Ansprüche 1 bis 10, dadurch gekennzeichnet, daß der Bewegungsantrieb als Rotationsmotor (5) ausgebildet ist, daß ein Kurbeltrieb vorgesehen ist, der die Drehbewegungen der Abtriebswelle des Rotationsmotors in oszillierende Schiebebewegungen der Schubstange (9) umsetzt und daß der Kurbeltrieb sowie der Rotationsmotor (5) vorzugsweise in einem Bürstengriff (2) angeordnet sind.

## Claims

1. A toothbrush having a brush head (3) containing at least one rotatable bristle holder (4) that carries the bristles or bundles of bristles of the toothbrush and is operatively connected to a drive for movement, characterized in that the bristle holder (4) is slidably guided at the brush head (3), transversely of the longitudinal expanse of the bristles or bundles of bristles, for a simultaneous rotary and sliding movement.

2. A toothbrush as claimed in claim 1, characterized in that the drive for movement is operatively connected to the bristle holder (4) through a turning - sliding gear transmission and that the turning - sliding gear transmission preferably transforms an oscillatory linear movement of the bristle holder (4) into a simultaneous rotary movement of the bristle holder (4) about its longitudinal axis.

3. A toothbrush as claimed in claim 1 or claim 2, characterized in that the turning - sliding gear transmission has at least one gear (13, 113) or similar rotary drive element non-rotatably connected to one bristle holder (4) in each case, that the turning - sliding gear transmission has at least one rack (14, 114) or similar companion drive element fixed with respect to the brush head (3) and that during a sliding movement the rotary drive element moves on rolling contact over the companion drive element.

4. A toothbrush as claimed in any one of claims 1 to 3, characterized in that the rotary drive element (s) (13, 113) are rotatably mounted between two carrier plates (11, 12), said carrier plates preferably being slidably guided in the brush head (3) and in particular being coupled to the drive for movement by way of a connecting rod (9).

5. A toothbrush as claimed in any one of claims 1 to 4, characterized in that the companion drive element (14, 114) is of approximately U-shaped configuration and is preferably held form-lockingly in the brush head (3) in the sliding direction of the bristle holder(s) (4), that the companion drive element (14, 114) is suitably arranged between the two carrier plates (11, 12), that the rotary drive element(s) (13, 113) move on rolling contact internally over the companion drive element (14, 114) and that for this purpose the companion drive element (14, 114) has in particular a toothing at at least one free end zone or web of its U-shape.

6. A toothbrush as claimed in any one of claims 1 to 5, characterized in that the turning - sliding gear transmission has a plurality of rotary drive elements (13), preferably two, for one bristle holder in each case and that the rotary drive elements (13) move on rolling contact at the same side over at least one companion drive element (14).

7. A toothbrush as claimed in any one of claims 1 to 5, characterized in that the turning - sliding gear transmission has a plurality of rotary drive elements (113), preferably two, for one bristle holder (4) in each case and that the adjacent rotary drive elements (113) move on rolling contact at mutually opposed sides over at least one companion drive element.

8. A toothbrush as claimed in any one of the preceding claims, characterized in that two rotary drive elements (113) are provided for one bristle holder (4) in each case, a first rotary drive element (113) thereof moving on rolling contact over the one free end zone (114a) and a second rotary drive element (113) thereof moving on rolling contact over the other opposite free end zone (114b) of the approximately U-shaped companion drive element (114), and that for this purpose the companion drive element has a toothing at both free end zones or webs (114a, 114b) of its U-shape.

9. A toothbrush as claimed in any one of claims 1 to 8, characterized in that each bristle holder (4) is detachably held at the rotary drive element (13, 113) associated thereto, preferably by way of a plug-in and/or clamp-type coupling, and that for this purpose the one toothbrush portion (13, 113) of said two toothbrush portions (4; 13, 113) has a noncircular, preferably polygonal recess (13c) adapted to form-lockingly receive a journal (4a) of the other respective toothbrush portion (4).

10. A toothbrush as claimed in claim 9, characterized in that the journal(s) (4a) preferably in each case traverse an oblong hole (15b) which extends in the sliding direction of the bundles of bristles (4) and is arranged in a cover plate (15) or similar outer casing side of the brush head (3).

11. A toothbrush as claimed in any one of claims 1 to 10, characterized in that the drive for movement takes the form of a rotary motor (5) provided with a crank mechanism transforming the rotary movements of the output shaft of the rotary motor into oscillatory sliding movements of the connecting rod (9) and that the crank mechanism and the rotary motor (5) are preferably arranged in a brush handle (2).

## Revendications

1. Brosse à dents comprenant une tête de brosse (3) qui présente au moins un support de poils (4) monté de manière à pouvoir être entraîné en rotation, lequel porte les poils ou les brins de poils de la brosse à dents et est en liaison d'entraînement avec un élément moteur, caractérisée en ce que le support de poils (4) est guidé sur la tête de brosse (3) de manière à pouvoir se déplacer en effectuant simultanément un mouvement rotatif et un mouvement coulissant transversalement par rapport à l'étendue longitudinale des poils.

2. Brosse à dents selon la revendication 1, caractérisée en ce que l'élément moteur est en liaison d'entraînement avec le support de poils (4) par le biais d'un mécanisme de rotation et de coulissement, et en ce que le mécanisme de rotation et de coulissement transforme, de préférence, un mouvement linéaire oscillant du support de poils (4) en un mouvement rotatif simultané du support de poils (4) autour de son axe longitudinal.

3. Brosse à dents selon la revendication 1 ou 2, caractérisée en ce que le mécanisme de rotation et de coulissement présente au moins une roue dentée (13, 113) ou des organes d'entraînement en rotation analogues, laquelle est chaque fois reliée de manière solidaire en rotation avec un support de poils (4), en ce que le mécanisme de rotation et de coulissement comporte au moins un élément à crémaillère (14, 114) ou un organe d'entraînement complémentaire analogue qui est fixe par rapport à la tête de brosse (3), et en ce que, lors d'un mouvement coulissant, l'organe d'entraînement en rotation prend appui en roulant sur l'organe d'entraînement complémentaire.

4. Brosse à dents selon l'une des revendications 1 à 3, caractérisée en ce que l'organe d'entraînement en rotation (13, 113) ou les organes d'entraînement en rotation sont montés de manière rotative entre deux plaques d'appui (11, 12) qui sont, de préférence, guidées sur la tête de brosse (3) de manière à pouvoir être déplacées et qui sont notamment reliées au mécanisme d'entraînement par le biais d'une bielle (9).

5. Brosse à dents selon l'une des revendications 1 à 4, caractérisée en ce que l'organe d'entraînement complémentaire (14, 114) est réalisé approximativement en forme de U et est, de préférence, maintenu avec un engagement positif dans la tête de brosse (3) dans le sens du coulissement du support de poils (4) ou des supports de poils, en ce que l'organe d'entraînement complémentaire (14, 114) est opportunément disposé entre les deux plaques d'appui (11, 12), en ce que l'organe d'entraînement en rotation (13, 113) ou les organes d'entraînement en rotation prennent appui en roulant sur le côté intérieur de l'organe de rotation complémentaire (14, 114), et en ce qu'à cet effet, l'organe d'entraînement complémentaire (14, 114) présente une denture dans au moins une zone d'extrémité libre ou sur une branche de sa forme en U.

6. Brosse à dents selon l'une des revendications 1 à 5, caractérisée en ce que le mécanisme de rotation et de coulissement présente plusieurs, de préférence deux organes d'entraînement en rotation (13) pour un support de poils, et en ce que les organes d'entraînement en rotation (13) prennent appui sur le même côté en roulant sur au moins un organe d'entraînement complémentaire (14).

7. Brosse à dents selon l'une des revendications 1 à 5, caractérisée en ce que le mécanisme de rotation et de coulissement présente plusieurs, de préférence deux organes d'entraînement en rotation (113) pour un support de poils (4), et en ce que les organes d'entraînement en rotation adjacents (113) prennent appui sur des côtés opposés en roulant sur au moins un organe d'entraînement complémentaire.

8. Brosse à dents selon l'une des revendications précédentes, caractérisée en ce que pour chaque support de poils (4) sont prévus deux organes d'entraînement en rotation (113) dont un premier organe d'entraînement en rotation (113) prend appui en roulant sur l'une des zones d'extrémité libres (114a) de l'organe d'entraînement complémentaire (114) approximativement en forme de U, et dont un second organe d'entraînement en rotation (113) prend appui en roulant sur l'autre zone d'extrémité libre (114b) opposée de cet organe d'entraînement, et en ce que l'organe d'entraînement complémentaire présente à cet effet une denture sur les deux zones d'extrémité libres ou sur les branches (114a, 114b) de sa forme en U.

9. Brosse à dents selon l'une des revendications 1 à 8, caractérisée en ce que chaque support de poils (4) est fixé de façon amovible à l'organe d'entraînement en rotation qui lui est associé (13, 113) par le biais d'un accouplement à enfichage et/ou à serrage, et en ce que, pour ce faire, l'une (13, 113) des deux parties de la brosse à dents (4; 13, 113) présente un évidement d'accouplement (13c) non circulaire, de préférence polygonal, dans lequel un pivot d'accouplement (4a) de l'autre partie de la brosse à dents (4) peut être inséré avec un engagement positif.

10. Brosse à dents selon la revendication 9, caractérisée en ce que le ou les pivots d'accouplement (4a) traversent un trou oblong (15b) s'étendant chaque fois dans le sens du coulissement des brins de poils (4) et se trouvant dans une plaque de recouvrement (15) ou dans un côté extérieur analogue du boîtier de la tête de brosse (3).

11. Brosse à dents selon l'une des revendications 1 à 10, caractérisée en ce que l'élément moteur est réalisé en tant que moteur rotatif (5), en ce qu'est prévu un mécanisme à bielle et manivelle qui transforme les mouvements rotatifs de l'arbre de commande du moteur rotatif en mouvements coulissants oscillants de la bielle (9), et en ce que le mécanisme à bielle et manivelle, ainsi que le moteur rotatif (5) sont, de préférence, placés dans un manche de brosse (2).
